# FASCICULE DE BREVET EUROPEEN

(11) **EP 2 699 939 B1**
(45) Date de publication et mention de la délivrance du brevet: **23.11.2016**
(21) Numéro de dépôt: 12714663.7
(22) Date de dépôt: 05.04.2012
(51) Int. Cl.: G01S 7/24, G01S 13/50, G01S 7/292, G01S 7/41, G01S 13/42, G01S 13/72

(54) **PROCÉDÉ POUR DÉTECTER, SUR PLUSIEURS TOURS D'ANTENNE, DES CIBLES LENTES NOYÉES DANS LE FOUILLIS RADAR AVEC UN RADAR MOBILE A ANTENNE ROTATIVE**
VERFAHREN ZUR ERKENNUNG, ÜBER MEHRERE ANTENNENUMDREHUNGEN, VON SICH LANGSAM BEWEGENDEN, IN DEN RADARSTÖRFLECKEN VERBORGENEN ZIELEN MITTELS EINES MOBILEN RADARS MIT ROTIERENDER ANTENNE
METHOD FOR DETECTING, OVER SEVERAL ANTENNA REVOLUTIONS, SLOW-MOVING TARGETS BURIED IN THE RADAR CLUTTER, USING A MOBILE RADAR HAVING A ROTARY ANTENNA

(30) Priorité: 21.04.2011 FR 1101256
(43) Date de publication de la demande: 26.02.2014
(73) Titulaire: THALES, 92400 Courbevoie (FR)
(72) Inventeur: QUELLEC, Jean-Michel, F-29810 Ploumoguer (FR); KEMKEMIAN, Stéphane, F-75014 Paris (FR); MAYEUX, Xavier, F-29810 Lampaul-Plouarzel (FR)
(74) Mandataire: Lucas, Laurent Jacques
(86) Numéro de dépôt international: PCT/EP2012/056325
(87) Numéro de publication internationale: WO 2012/143251

(56) Documents cités:
- EP-A2- 1 826 585
- US-A- 4 833 475
- US-A1- 2005 264 438

## Description

La présente invention concerne un procédé pour détecter des cibles avec un radar mobile à antenne rotative. Elle s'applique plus particulièrement dans le domaine des radars navals ou aéroportés recherchant des cibles maritimes.

A cause du fouillis radar, détecter des petites cibles de faible Surface Equivalente Radar (SER) depuis des plates-formes mobiles, comme des aéronefs ou des navires par exemple, n'est pas sans poser de nombreuses difficultés. En effet, l'espace de recherche d'un radar rotatif, quoique s'étendant sur 360° d'azimut, est limité en distance D. Le domaine azimutal instantané de l'antenne étant limité au lobe d'antenne θ₀, ce lobe doit être mis en mouvement exploratoire sur 360° pour couvrir l'espace de recherche. Au cours de l'exploration du domaine de recherche sur 360° d'azimut et sur une profondeur distance D, le radar établit un état des détections sous la forme d'un ensemble de positions des détections par rapport à une position de référence. Une détection se caractérise par le franchissement d'un seuil prédéfini, soit manuellement par l'opérateur, soit par un dispositif de positionnement adaptatif automatique. Mais dans la situation où le niveau reçu d'une cible est faible par rapport au niveau des nombreuses impulsions de fouillis radar, couramment appelées "spikes" dans la littérature anglo-saxonne, une détection fiable de cette cible sur un seul passage d'antenne est très difficile. En effet, si le seuil est placé haut pour éviter la détection des impulsions parasites, alors la cible n'est pas détectée. Et si le seuil est placé bas, alors le niveau de la cible est noyé parmi les nombreuses impulsions parasites. Il s'agit de l'un des problèmes techniques que la présente invention se propose de résoudre.

Des techniques ont été développées pour tenter de surmonter cette difficulté, notamment pour les radars embarqués sur une plate-forme mobile et dans le cas où les positions des détections des impulsions parasites sont décorrélées au moins partiellement sur plusieurs tours d'antenne successifs. Ces techniques consistent à tester la stabilité des présomptions de détection dans l'espace de recherche. Il s'agit de déterminer des états de prédétection sur N tours d'antenne successifs, puis à décaler les positions des prédétections dans un repère unique pour les N tours d'antenne (de manière à ce qu'une cible immobile soit localisée à la même position dans ce repère unique pour les N tours d'antenne), et enfin à tester, dans ce repère unique, la confirmation de chaque prédétection sur les N tours d'antenne. Une difficulté tient à ce que, le radar réalisant par principe ses mesures de position en azimut et en distance, l'état des prédétections sur un tour d'antenne est obtenu dans une représentation polaire. Au tour d'antenne suivant, la position du porteur du radar s'étant translatée, il n'est pas possible de faire directement une superposition des prédétections obtenues dans les référentiels polaires des tours d'antenne successifs. Une autre difficulté tient à ce que les cibles potentielles sont mobiles et à ce que, même si la difficulté liée au déplacement du porteur est contournée, les positions des cibles sur plusieurs tours d'antenne ne sont pas directement superposables. Il s'agit là encore d'un problème que la présente invention se propose de résoudre.

Pour tenter de surmonter ces difficultés, une solution connue consiste à intégrer tour à tour les prédétections en coordonnées cartésiennes (X,Y). Pour chaque tour d'antenne, les positions des prédétections radar, obtenues initialement en coordonnées polaires, sont reportées dans un repère cartésien plan dont l'origine est proche de la position du porteur. Les décalages des prédétections obtenues sur les tours d'antenne successifs sont réalisés simplement par décalage correspondant au déplacement du porteur en (X,Y) entre les débuts des tours d'antenne successifs. Après décalage des prédétections des N derniers tours dans le repère (X,Y) du dernier tour, un test de détection de type K/N est réalisé dans chaque cellule du plan : il s'agit de tester si le nombre de prédétections est supérieur à un nombre K sur N tours d'antenne. Un inconvénient majeur de cette solution est que la cellule élémentaire d'intégration sur la carte radar est un carré ou un rectangle et que le rapport entre cette cellule et une cellule élémentaire de résolution du radar est variable. En effet, une cellule élémentaire de résolution du radar est définie par l'ouverture de lobe d'antenne en azimut et par la résolution du radar en distance. La résolution radar est donc notamment variable en fonction de la distance. Donc, les performances de détection ne sont pas homogènes.

Pour tenter de surmonter cet inconvénient, une autre solution se base sur la création de N cartes de prédétections en coordonnées polaires (ρ,θ) avec des pas en azimut θ et en distance ρ compatibles avec des déplacements possibles d'une cible sur les N tours utilisés pour la détection. Les prédétections sur les N cartes sont décalées dans le repère du plan correspondant au tour d'antenne courant. Un test est ensuite réalisé pour vérifier si, dans chaque cellule, le nombre de prédétections est supérieur à un nombre K sur N tours d'antenne. Un inconvénient majeur de cette solution est l'espace mémoire important nécessaire pour stocker les cartes de prédétections sur les N tours, ainsi que la puissance de calcul nécessaire pour décaler les prédétections obtenues dans un repère (ρ,θ) centré sur l'origine de chacun des N tours dans le repère du tour courant. Un autre inconvénient de cette solution est que, la taille de la cellule d'intégration étant grande par rapport à la résolution en distance élémentaire du radar, le déplacement de la cible sur la durée des N tours étant souvent grand par rapport à la dimension de la cible et le seul test appliqué sur les prédétections étant un test de type K/N, le seuil d'entrée pour établir les prédétections doit être suffisamment élevé pour limiter les fausses alarmes en sortie de traitement. Cela entraîne une perte de sensibilité de détection des petites cibles dans le fouillis radar.

La demande de brevet GB 2435 138 A décrit un dispositif d'intégration tour à tour des prédétections. Elle est basée sur l'utilisation de deux fenêtres pour les opérations de décalage et de test : une fenêtre rectangulaire entourant la cellule de résolution radar et une fenêtre délimitant une fourchette distance. C'est une solution mixte entre les solutions d'intégration en coordonnées cartésiennes et d'intégration en coordonnées polaires décrites précédemment, dont elle présente les inconvénients énoncés précédemment.

Un document US 4 833 475 divulgue un procédé pour détecter des cibles avec un radar mobile à antenne rotative.

Un document US 2005/264438 divulgue un système radar à balayage qui permet la détection « *scan-to-scan »* de cibles en mouvement.

L'invention a notamment pour but de permettre, sans nécessiter une puissance de traitement considérable, la détection de petites cibles plus connu par l'expression anglo-saxonne « track before detect ». Mais la présente invention propose surtout une mise en oeuvre simple et efficace de ce principe : les prédétections obtenues durant les différents tours d'antenne sont rangées dans une grille de rangement fixe ayant des pas en azimut et distance dont la taille est définie par les déplacements possibles de la cible. A cet effet, l'invention a pour objet un procédé pour détecter des cibles avec un radar mobile à antenne rotative. Le procédé comporte une étape de détermination de prédétections durant N tours d'antenne, où N entier strictement positif. Cette étape inclut, pour k entier variant de 1 à N, durant le k^{ème} tour d'antenne, une étape de détermination de prédétections, une prédétection correspondant à un écho radar reçu d'un azimut et d'une distance au-delà d'une amplitude donnée, chaque prédétection étant rangée dans une grille de cellules centrée sur la position qu'occupait le radar au début du k^{ème} tour d'antenne alors que celle-ci pointait un azimut de référence, chaque prédétection incluant son amplitude, son azimut, sa distance et le rang k, chaque cellule de la grille correspondant à une plage d'azimut et une plage de distance. Cette étape de détermination de prédétections inclut également, à l'instant où le k^{ème} tour d'antenne se termine en pointant à nouveau l'azimut de référence et après que la grille ait été recentrée sur la position qu'occupe le radar à cet instant, une étape de décalage de toutes les prédétections rangées dans la grille durant les tours précédents, les prédétections étant décalées du déplacement subit par le radar durant le k^{ème} tour d'antenne. Le procédé comporte également une étape de détermination des détections, une cible étant détectée dès lors qu'un ensemble de prédétections rangées dans la grille a ses distances au radar variant de façon linéaire durant les N tours d'antenne. Le procédé permet de détecter les petites cibles noyées dans le fouillis radar sans augmenter le nombre de fausses détections.

Avantageusement, l'étape de détermination des détections peut inclure, si une cellule de la grille contient un nombre de prédétections supérieur à un nombre donné, une étape de regroupement de toutes les prédétections rangées dans ladite cellule avec toutes les prédétections rangées dans des cellules voisines de ladite cellule. L'étape de détermination des détections peut également inclure, pour les cellules issues de l'étape de regroupement, une étape de construction d'un histogramme des pentes de la distance au radar en fonction du rang k pour tous les couples de prédétections contenues dans les cellules issues de l'étape de regroupement. L'étape de détermination des détections peut également inclure, si l'histogramme comporte un pic correspondant à un nombre de couples de prédétections ayant une même valeur de pente supérieur à un seuil donné, une étape de régression linéaire sur la distance au radar en fonction du rang k pour toutes les prédétections issues de l'étape de regroupement, les cellules pour lesquelles le maximum de l'histogramme est inférieur audit seuil donné n'étant pas retenues pour l'étape de régression linéaire.

Avantageusement là encore, l'étape de régression peut inclure une première étape de régression linéaire sur la distance au radar en fonction du rang k pour toutes les prédétections issues de l'étape de regroupement, les prédétections éloignées de la droite de régression au-delà d'un seuil en distance donné étant éliminées. L'étape de régression peut également inclure une deuxième étape de régression linéaire sur la distance au radar en fonction du rang k pour les prédétections n'ayant pas été éliminées, une cible étant détectée dès lors que la variance des écarts de distance par rapport à la droite de régression est inférieure à un seuil en distance donné.

Par exemple, la localisation précise d'une prédétection peut être rangée dans la grille sous la forme d'un azimut obtenu par un algorithme de centre plot et d'un numéro d'échantillon distance.

Dans un mode de réalisation, les prédétections peuvent être rangées dans une mémoire dont les adresses sont définies par un indice correspondant à une plage d'azimut et un indice correspondant à une plage de distance.

Par exemple, l'azimut de référence peut être l'azimut 0°.

La présente invention a encore pour principal avantage que l'utilisation d'une grille de rangement fixe permet un traitement systématique et évite ainsi les difficultés d'associations des plots aux pistes durant le traitement de pistage avant détection. Un autre avantage de l'invention est que, les prédétections étant stockées dans la grille avec un pas de mesure en distance bien plus fin que la grille, les calculs de décalage et de pistage avant détection peuvent être effectués avec une plus grande précision.

D'autres caractéristiques et avantages de l'invention apparaîtront à l'aide de la description qui suit faite en regard de dessins annexés qui représentent :
- la figure 1, un exemple de grille de cellules azimut-distance pour ranger des prédétections selon l'invention ;
- la figure 2, un exemple de découpage en cellules azimut-distance et des regroupements de ces cellules selon l'invention ;
- la figure 3, des exemples de cas de détections à partir de prédétections selon l'invention ;
- la figure 4, un exemple de représentation de prédétections selon l'invention ;
- la figure 5, un exemple d'histogramme de pentes de la distance en fonction du rang de tour d'antenne selon l'invention.

Un principe de l'invention est d'utiliser un seuil de détection très faible. A l'issue d'un tour d'antenne, les prédétections réalisées durant ce tour, qui incluent quelques vraies détections et de très nombreuses fausses alarmes, sont décalées dans un repère centré sur la position du porteur du radar au début du tour d'antenne puis elles sont rangées dans une grille de cellules couvrant l'espace de détection avec des pas adaptés en azimut et distance. Durant plusieurs tours d'antenne successifs, les prédétections réalisées durant l'un de ces tours sont décalées des déplacements du porteur dans le repère polaire du tour d'antenne courant. Les décalages sont réalisés de manière itérative, c'est-à-dire de tour d'antenne à tour d'antenne. Les positions décalées sont rangées dans la grille de rangement. Le décalage est effectué avec un pas beaucoup plus fin que le pas de la grille de rangement. Les distances précises des prédétections sur les différentes cellules « azimut-distance » sur les différents tours d'antenne subissent des tests en cascade pour vérifier, à chaque étape la linéarité de la variation de la distance des prédétections sur les différents tours d'antenne. A chaque étape, les prédétections pour lesquelles la variation de distance n'est pas linéaire sont éliminées, ce qui permet de réduire la puissance de calcul.

Le procédé selon l'invention comporte une étape de détermination de prédétections. Les prédétections correspondent au franchissement d'un seuil en une localisation dans le tour d'antenne courant.

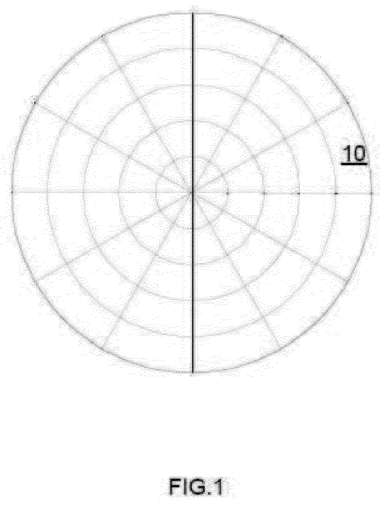

Comme illustré par la figure 1, qui illustre un exemple de grille de cellules azimut-distance selon l'invention, les prédétections sont déterminées dans des cellules définies en coordonnées polaires, de telles coordonnées étant homogènes des mesures d'un radar. L'espace de détection couvre 360° en azimut en prenant le Nord comme origine des azimuts et la portée instrumentée du radar en distance est partagée de manière systématique. La découpe du domaine de détection en cellules de type azimut-distance, comme la cellule 10 par exemple, est choisie en fonction de l'application, de manière à ce qu'une fois la compensation du chemin du porteur réalisée, la cible ne sorte pas du domaine. Cette découpe dépend donc de la vitesse potentielle des cibles recherchées et de la distance de la cellule par rapport au radar et du temps d'intégration utilisé, ce temps dépendant de la vitesse de rotation de l'antenne et du nombre de tours d'antenne utilisés pour l'intégration.

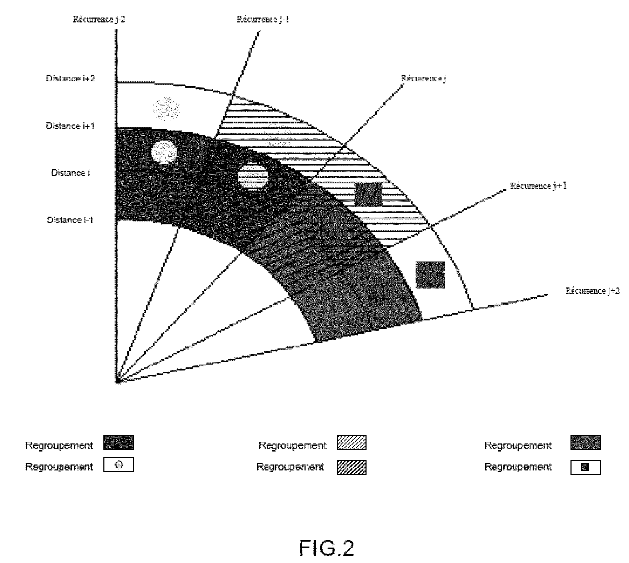

Comme illustré par la Figure 2, qui illustre notamment un exemple de découpage de l'espace de détection en cellules azimut-distance selon l'invention, pour éviter la migration de cellule à cellule pendant le temps d'intégration, un chevauchement des cellules est prévu. Ainsi, dans un mode de réalisation de l'invention, le domaine au-dessus d'une certaine distance peut être découpé en cellules faisant 2 pas de 0,9° en azimut et 2 pas de 66 mètres en distance.

Les prédétections sont rangées dans une mémoire dont les adresses sont définies par un indice j de récurrence d'azimut et un indice i de distance de la cellule azimut-distance dans laquelle la prédétection a eu lieu. Mais l'invention propose de localiser les prédétections de manière beaucoup plus fine en distance et en azimut que la simple découpe en cellules azimut-distance. La localisation précise en distance est réalisée en mémorisant le numéro d'échantillon distance dans lequel la prédétection a été réalisée. Dans les modes de détection de petites cibles marines, la résolution en distance est métrique et l'extension en distance des cibles est bien plus faible que l'extension en distance de la cellule azimut-distance d'intégration. La localisation en azimut peut être réalisée par un algorithme de centre plot, qui est connu par ailleurs, utilisant le fait que quand l'antenne balaie devant la cible, plusieurs impulsions radar sont reçues de la cible et qu'un azimut est associé à chaque impulsion par un dispositif spécifique connu par ailleurs.

A la fin de l'étape de prédétection, après chaque balayage du radar devant la cible, et pour chaque cellule azimut-distance, un certain nombre de prédétections sont rangées à l'adresse mémoire de la cellule azimut-distance. Chaque prédétection est caractérisée par une amplitude, une distance précise et un azimut précis. Il faut noter que pour une cible non ponctuelle, plusieurs prédétections peuvent être rangées à cet effet dans la cellule. Cela n'influe pas sur la capacité de détection de la cible. A cet effet, il est prévu un regroupement des détections en sortie du traitement.

Le procédé selon l'invention comporte aussi une étape de décalage dans le tour courant des prédétections effectuées à l'étape précédente de prédétection, ceci par rapport au référentiel centré sur le porteur lors du passage de l'antenne à l'azimut 0°de référence. Ce décalage utilise les positions mesurées des prédétections au temps t et les informations de déplacement du porteur entre le temps t₀, correspondant au passage de l'antenne au Nord et à la référence tᵤ tour d'antenne. Les informations de déplacement du porteur sont obtenues d'une centrale de navigation.

Le procédé selon l'invention comporte aussi une étape de décalage des prédétections sur les n tours d'antenne. Cette opération est réalisée en prenant en compte les positions des prédétections réalisées aux différents tours d'antenne S₀, S₁,..., Sₙ₋₁, correspondant aux origines de repères R₀, R₁, ....Rₙ₋₁ et aux temps associés t₀, t₁, ....tₙ₋₁ et les translations de positions porteurs entre les différents repères. De manière à ce que les opérations ultérieures de traitement du signal sur plusieurs tours puissent être réalisées, les positions décalées des prédétections sur les tours S₀, S₁,..., Sₙ₋₁, doivent être conservées sur les n tours. Pour les n tours, ces n positions décalées par rapport à l'origine du tour Sₙ₋₁ sont conservées dans la mémoire de la cellule du tour Sₙ₋₁ (même si la prédétection, à cause des mouvements du porteur, était dans une autre cellule azimut-distance dans les tours précédents). Cette opération de décalage sur les n tours pour chaque cellule azimut-distance est menée de manière glissante, c'est-à-dire que lors du tour Sₙ, les prédétections du tour S₀ sont détruites.

Avantageusement, les calculs de décalage sont réalisés de manière itérative. Les positions des prédétections décalées sur les n derniers tours, pour le tour n, sont décalées en prenant en compte le vecteur de déplacement du porteur radar (Rₙ₋₁ Rₙ). Cela permet de simplifier les algorithmes de décalage et d'utiliser des calculs de décalage utilisant des développements limités car, en général, le déplacement est faible par rapport à la distance des détections : cela diminue la puissance de calcul requise. De manière à éviter les cumuls d'erreur de troncature lors des opérations de décalage du chemin porteur, les calculs doivent être réalisés en flottant ou avec une dynamique de calcul suffisante.

Le procédé selon l'invention comporte aussi une étape, pour chaque cellule azimut-distance, de regroupement des prédétections sur les cellules voisines. Le regroupement de cellules permet avantageusement la détection de cibles qui se trouvent à la limite de la frontière d'une cellule et qui franchissent cette frontière durant les N tours d'antenne d'analyse.
Selon la découpe de l'espace de détection réalisée dans la première étape, cette étape de regroupement inclut de mémoriser, pour le tour Sₙ, les positions des prédétections décalées des déplacements du porteur sur les n derniers tours dans un même espace mémoire associé à la cellule azimut-distance de référence et aux cellules voisines en distance et azimut. En se référant par exemple à la figure 2, qui illustre également des exemples de regroupements de cellules azimut-distance selon l'invention, les prédétections sur les n derniers tours pour les 4 cellules en rouge sont stockées dans un espace mémoire associé à la cellule délimitée par [(Distance i-1, Distance i) ; (Récurrence j-2, Récurrence j-1)]. A la fin de cette étape de regroupement, l'espace mémoire associé à un regroupement référencé à une cellule azimut-distance contient des informations sur les différentes prédétections dans les cellules regroupées sur les n derniers tours. Les informations stockées dans chaque espace mémoire incluent l'azimut, la distance et l'amplitude.

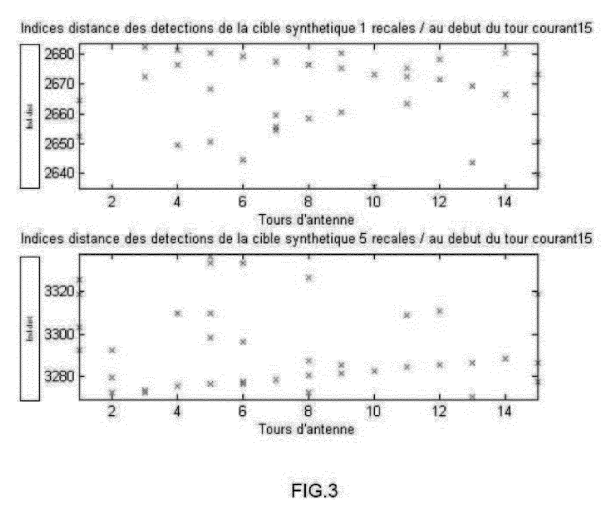

Comme illustré par l'exemple de la figure 3, qui illustre des exemples pour 15 tours d'antenne de cas de détections à partir de prédétections selon l'invention, il est possible de représenter graphiquement les distances des différentes prédétections survenues dans une cellule sur les n derniers tours. Sur la figure 3, les prédétections entourées correspondent à des détections alignées. Les autres correspondent à des fausses alarmes.

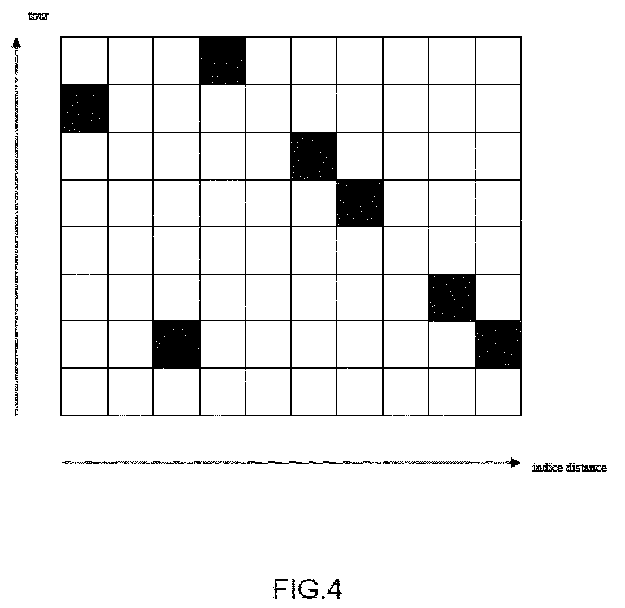

Les étapes qui suivent permettent d'exploiter les données de présence et de distance précise sur les n derniers tours, pour chaque cellule azimut-distance de l'espace de détection, comme celles présentées dans l'exemple de tableau de la figure 4, qui illustre un exemple de représentation de prédétections selon l'invention, pour définir s'il y a ou non une détection dans cette cellule. Il s'agit notamment de vérifier si les distances sont alignées. En effet, des distances alignées correspondent à des détections de cibles marines qui, de manière générale, se déplacent sur des trajectoires rectilignes sur un horizon de temps court. Ce n'est pas le cas pour des détections parasites issues de réflexions sur la mer, couramment appelées "spikes" selon la terminologie anglo-saxonne. L'invention propose notamment, afin de diminuer la puissance de calcul requise, de ne pas réaliser le test de linéarité de l'évolution de la distance radiale de la cible sur la totalité des cellules azimut-distance du domaine. Ainsi, le test final de linéarité n'est réalisé que sur des cellules pour lesquelles un certain nombre de tests préalables de vraisemblance, ne nécessitant qu'une puissance de calcul limitée, sont franchis. Cela permet de ne faire le test approfondi de linéarité que sur un nombre limité de cellules azimut-distance.

Le procédé selon l'invention comporte aussi une étape de diminution du nombre de cellules candidates. Il s'agit de tester le nombre de prédétections dans la cellule.

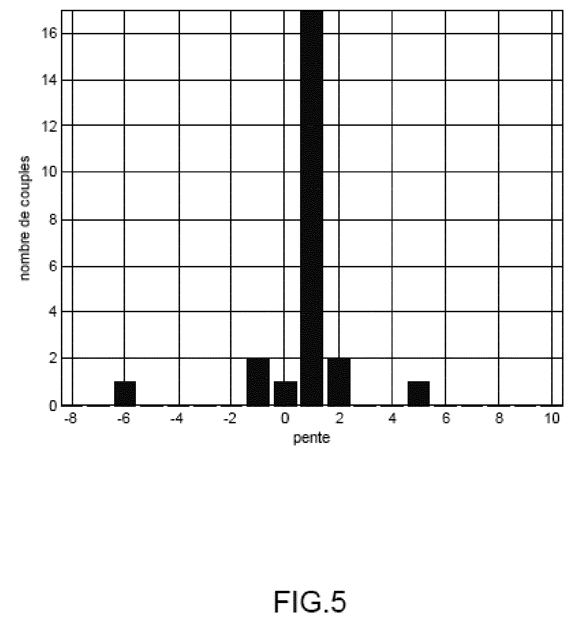

Le procédé selon l'invention comporte aussi une étape de construction d'un histogramme de pentes de la distance en fonction du rang de tour d'antenne, comme l'exemple illustré par la figure 5, pour chaque cellule contenant suffisamment de prédétections. Par exemple, les pentes sont calculées sur tous les couples de points du tableau de la figure 4 ayant pour coordonnées x les sous-indices distances représentatifs de la distance et pour coordonnées y, les rangs de tours. La pente pour un couple de points est donnée par *p* = Δ*x* / Δ*y*. Pour les différents couples de points du tableau de la figure 4, une pente peut être calculée et un histogramme des valeurs de pente peut être calculé comme illustré par la figure 5. Si l'historique des cellules distance-azimut contient une cible immobile ou ayant une trajectoire linéaire sur le temps d'intégration, alors l'histogramme présente un pic, car les pentes entre prédétections reflètent une vitesse radiale constante. Ainsi, un test est réalisé pour comparer le maximum de l'histogramme à un seuil. Seules les cellules pour lesquelles le maximum de l'histogramme dépasse le seuil sont retenues pour les étapes suivantes.

Il faut noter que des variantes de cette étape de construction d'un histogramme peuvent réduire la puissance de calcul nécessaire. Il peut par exemple s'agir de construire l'histogramme en plusieurs sous-étapes, en faisant l'histogramme des pentes et le test associé sur le maximum uniquement sur un historique de M tours avec M<N, le test sur l'historique en N tours n'étant alors effectué que sur les cellules ayant réussi le test sur l'historique en M tours. Cette variante permet de réduire la puissance de calcul en ne faisant le test complet sur N tours, qui est le plus coûteux en temps de calcul, que sur un nombre limité de cellules dans la carte radar.

Le procédé selon l'invention comporte aussi une étape de régression linéaire.

Tout d'abord, une première régression linéaire est effectuée sur le tableau des positions en (x,y) des prédétections du graphique de la figure 3, uniquement pour les cellules azimut-distance ayant franchi le test du maximum dans l'histogramme. Les prédétections trop éloignées de la droite de régression sont éliminées du tableau, car elles peuvent être considérées comme des points aberrants.

Puis, une deuxième régression linéaire est effectuée sur ce même tableau après élimination des prédétections trop éloignées. La variance des écarts des positions par rapport à la droite de régression est seuillée. Si cette variance est inférieure au seuil, il est décidé que la variation temporelle, sur les différents tours d'antenne, de la distance de la prédétection, est linéaire et que la détection est validée pour cette cellule azimut-distance.

Enfin, le procédé selon l'invention comporte aussi une étape d'agrégation des détections. En effet, étant donné le principe de découpe systématique de l'espace de détection en cellules azimut-distance selon la première étape, une cible peut, à l'issue des différentes étapes décrites précédemment, créer une détection validée sur des cellules voisines. Il y a alors deux possibilités.

Soit la sortie du traitement est uniquement pour une visualisation à destination d'un opérateur. Alors les détections peuvent être présentées sans traitement complémentaire. L'opérateur voit ainsi des détections plus ou moins étendues selon les cibles détectées.

Soit la sortie du traitement est utilisée par un autre traitement, comme par exemple une fonction de pistage. Alors la position de la détection peut être affinée en effectuant un calcul du barycentre des détections contiguës.

L'invention décrite précédemment a pour principal avantage de ne pas nécessiter une puissance de traitement considérable, qu'il s'agisse de ressources de mémorisation ou de calcul. Notamment parce que les étapes classiques du filtrage de Kalman y sont remplacés par des tests simples de cohérence cinématique, comme des tests simplifiés de pistage avant détection adaptés à des durées de trajectoire de cibles pendant la courte durée de l'initialisation de la détection, ces tests étant de surcroît effectués sur les éléments de la grille fixe. Egalement parce qu'un simple test permet d'obtenir une bonne indication sur le fait que la distance de la prédétection varie bien linéairement sur l'horizon temporel des tours d'antenne successifs et ainsi de déduire qu'il y a une forte présomption de présence d'une cible dans une cellule de la grille et non du fouillis radar.

Par ailleurs, l'invention décrite précédemment a également pour avantage que, grâce au décalage itératif des prédétections sur plusieurs tours d'antenne par rapport au déplacement du porteur, elle est bien adaptée à la détection par un radar monté sur une plate-forme navale ou aéroportée.

## Revendications

1. Procédé pour détecter des cibles avec un radar mobile à antenne rotative, ledit procédé comportant :
- une étape de détermination de prédétections durant N tours d'antenne, où N entier strictement positif, cette étape incluant, pour k entier variant de 1 à N :
o durant le k^{ème} tour d'antenne, une étape de détermination de prédétections, une prédétection correspondant à un écho radar reçu d'un azimut et d'une distance au-delà d'une amplitude donnée, chaque prédétection étant rangée dans une grille de cellules centrée sur la position qu'occupait le radar au début du k^{ème} tour d'antenne alors que celle-ci pointait un azimut de référence, chaque prédétection incluant son amplitude, son azimut, sa distance et le rang k, chaque cellule de la grille correspondant à une plage d'azimut et une plage de distance ;
o à l'instant où le k^{ème} tour d'antenne se termine en pointant à nouveau l'azimut de référence et après que la grille a été recentrée sur la position qu'occupe le radar à cet instant, une étape de décalage de toutes les prédétections rangées dans la grille durant les tours précédents, les prédétections étant décalées du déplacement subit par le radar durant le k^{ème} tour d'antenne ;
**caractérisé en ce que** ledit procédé comporte :
- une étape de détermination des détections, une cible étant détectée dès lors qu'un ensemble de prédétections rangées dans la grille a ses distances au radar variant de façon linéaire durant les N tours d'antenne ;
de manière à détecter les petites cibles noyées dans le fouillis radar sans augmenter le nombre de fausses détections,
cette étape de détermination des détections incluant :
- si une cellule de la grille contient un nombre de prédétections supérieur à un nombre donné, une étape de regroupement de toutes les prédétections rangées dans ladite cellule avec toutes les prédétections rangées dans des cellules voisines de ladite cellule,
- pour les cellules issues de l'étape de regroupement, une étape de construction d'un histogramme des pentes de la distance au radar en fonction du rang k pour tous les couples de prédétections contenues dans les cellules issues de l'étape de regroupement ;
- si l'histogramme comporte un pic correspondant à un nombre de couples de prédétections ayant une même valeur de pente supérieur à un seuil donné, une étape de régression linéaire sur la distance au radar en fonction du rang k pour toutes les prédétections issues de l'étape de regroupement, les cellules pour lesquelles le maximum de l'histogramme est inférieur audit seuil donné n'étant pas retenues pour l'étape de régression linéaire.

2. Procédé selon la revendication 1, **caractérisé en ce que** l'étape de régression inclut :
- une première étape de régression linéaire sur la distance au radar en fonction du rang k pour toutes les prédétections issues de l'étape de regroupement, les prédétections éloignées de la droite de régression au-delà d'un seuil en distance donné étant éliminées;
- une deuxième étape de régression linéaire sur la distance au radar en fonction du rang k pour les prédétections n'ayant pas été éliminées, une cible étant détectée dès lors que la variance des écarts de distance par rapport à la droite de régression est inférieure à un seuil en distance donné.

3. Procédé selon la revendication 1, **caractérisé en ce que** la localisation précise d'une prédétection est rangée dans la grille sous la forme d'un azimut obtenu par un algorithme de centre plot et d'un numéro d'échantillon distance.

4. Procédé selon la revendication 1, **caractérisé en ce que** les prédétections sont rangées dans une mémoire dont les adresses sont définies par un indice correspondant à une plage d'azimut et un indice correspondant à une plage de distance.

5. Procédé selon la revendication 1, **caractérisé en ce que** l'azimut de référence est l'azimut 0°.

## Patentansprüche

1. Verfahren zum Erkennen von Zielen mit einem mobilen Radar mit rotierender Antenne, wobei das Verfahren Folgendes beinhaltet:
- einen Schritt des Bestimmens von Früherkennungen bei N Antennenumdrehungen, wobei N eine streng positive ganze Zahl ist, wobei dieser Schritt für eine ganz Zahl k, die zwischen 1 und N variiert, Folgendes beinhaltet:
o während der k^{-ten} Antennenumdrehung, einen Schritt des Bestimmens von Früherkennungen, wobei eine Früherkennung einem empfangenen Radarecho mit einem Azimut und einer Entfernung jenseits einer gegebenen Amplitude entspricht, wobei jede Früherkennung in einem Zellengitter positioniert ist, das in der Position zentriert ist, die von dem Radar zu Beginn der k^{-ten} Antennenumdrehung eingenommen wird, während diese auf einen Referenzazimut ausgerichtet war, wobei jede Früherkennung ihre Amplitude, ihren Azimut, ihre Entfernung und den Rang k beinhaltet, wobei jede Zelle des Gitters einem Azimutbereich und einem Entfernungsbereich entspricht;
o in dem Moment, in dem die k^{-te} Antennenumdrehung endet und die Antenne wieder auf den Referenzazimut ausgerichtet ist und nachdem das Gitter neu in der Position zentriert wurde, die das Radar in diesem Moment einnimmt, einen Schritt des Versetzens aller bei den vorherigen Umdrehungen in dem Gitter positionierten Früherkennungen, wobei die Früherkennungen um den Weg versetzt werden, den das Radar bei der k^{-ten} Antennenumdrehung zurücklegt;
**dadurch gekennzeichnet, dass** das Verfahren Folgendes beinhaltet:
- einen Schritt des Bestimmens von Erkennungen, wobei ein Ziel erkannt wird, sobald ein Satz von Früherkennungen in dem Gitter Entfernungen vom Radar hat, die auf lineare Weise während der N Antennenumdrehungen variieren;
um so die kleinen Ziele zu erkennen, die im Radarrauschen eingebettet sind, ohne die Anzahl von Fehlerkennungen zu erhöhen,
wobei dieser Schritt des Bestimmens von Erkennungen Folgendes beinhaltet:
- wenn eine Zelle des Gitters eine Anzahl von Früherkennungen enthält, die größer ist als eine gegebene Zahl, einen Schritt des Gruppierens aller in der Zelle befindlichen Früherkennungen mit allen in Nachbarzellen der Zelle befindlichen Früherkennungen,
- für die Zellen aus dem Gruppierungsschritt, einen Schritt des Erstellens eines Histogramms von Steigungen der Entfernung von dem Radar in Abhängigkeit von Rang k für alle Früherkennungspaare, die in den Zellen aus dem Gruppierungsschritt enthalten sind;
- wenn das Histogramm eine Spitze umfasst, die einer Anzahl von Früherkennungspaaren mit einem selben Steigungswert entspricht, der größer ist als eine gegebene Schwelle, einen Schritt der linearen Regression über die Entfernung von dem Radar in Abhängigkeit von Rang k für alle Früherkennungen aus dem Gruppierungsschritt, wobei die Zellen, für die das Maximum des Histogramms kleiner ist als die gegebene Schwelle, für den Schritt der linearen Regression nicht behalten werden.

2. Verfahren nach Anspruch 1, **dadurch gekennzeichnet, dass** der Regressionsschritt Folgendes beinhaltet:
- einen ersten Schritt der linearen Regression über die Entfernung von dem Radar in Abhängigkeit von Rang k für alle Früherkennungen aus dem Gruppierungsschlitt, wobei die Früherkennungen, die über eine gegebene Entfernungsschwelle hinaus von der Regressionsgeraden abweichen, eliminiert werden;
- einen zweiten Schritt der linearen Regression über die Entfernung von dem Radar in Abhängigkeit von Rang k für alle Früherkennungen, die nicht eliminiert wurden, wobei ein Ziel erkannt wird, sobald die Streuung von Entfernungsabweichungen in Bezug auf die Regressionsgerade kleiner als eine gegebene Entfernungsschwelle ist.

3. Verfahren nach Anspruch 1, **dadurch gekennzeichnet, dass** die präzise Lokalisierung einer Früherkennung in dem Gitter in Form eines Azimut erfolgt, der durch einen Algorithmus von Kurvenmittelpunkt und einer Entfernungabtastzahl erhalten wird.

4. Verfahren nach Anspruch 1, **dadurch gekennzeichnet, dass** die Früherkennungen in einem Speicher angeordnet werden, dessen Adressen durch einen einem Azimutbereich entsprechenden Index und einen einem Entfernungsbereich entsprechenden Index definiert werden.

5. Verfahren nach Anspruch 1, **dadurch gekennzeichnet, dass** der Referenzazimut der Azimut 0° ist.

## Claims

1. A method for detecting targets using a mobile radar having a rotary antenna, the said method containing :
- a step of determining pre-detections during N antenna revolutions, where N is a strictly positive integer, this step including, for an integer k varying from 1 to N:
∘ during the k^{th} antenna revolution, a step of determining pre-detections, a pre-detection corresponding to a radar echo received from an azimuth and a distance beyond a given amplitude, each pre-detection being stored in a grid of cells centered on the position that the radar occupied at the start of the k^{th} antenna revolution when the latter pointed to a reference azimuth, each pre-detection including its amplitude, its azimuth, its distance and the rank k, each cell of the grid corresponding to an azimuth range and a distance range;
∘ at the instant when the k^{th} antenna revolution ends by pointing again to the reference azimuth, and after the grid has been re-centered on the position that the radar occupies at that instant, a step of shifting all the pre-detections stored in the grid during the preceding revolutions, the pre-detections being shifted by the movement undergone by the radar during the k^{th} antenna revolution;
**characterized in that** the said method contains:
- a step of determining detections, a target being detected from the moment that a set of pre-detections stored in the grid has its distances to the radar varying in a linear manner during the N antenna revolutions;
in such a way as to detect small targets buried in the radar clutter without increasing the number of false detections,
this step of determining detections including :
- if a grid cell contains a number of pre-detections above a given number, a step of grouping all the pre-detections stored in said cell with all the pre-detections stored in neighboring cells of said cell,
- for cells resulting from the grouping step, a step of constructing a histogram of the gradients of distance to the radar as a function of rank k for all the pairs of pre-detections contained in the cells resulting from the grouping step;
- if the histogram contains a peak corresponding to a number of pairs of pre-detections having a same gradient value above a given threshold, a step of linear regression over the distance to the radar as a function of rank k for all the pre-detections resulting from the grouping step, the cells for which the histogram maximum is below said given threshold not being retained for the linear regression step.

2. The method as claimed in claim 1, **characterized in that** the regression step includes :
- a first step of linear regression over the distance to the radar as a function of rank k for all the pre-detections originating from the grouping step, the pre-detections remote from the regression line beyond a given distance threshold being eliminated;
- a second step of linear regression over the distance to the radar as a function of rank k for the pre-detections that have not been eliminated, a target being detected from the moment that the variance of the distance deviations from the regression line is below a given distance threshold.

3. The method as claimed in claim 1, **characterized in that** the precise location of a pre-detection is stored in the grid in the form of an azimuth obtained by a center pip algorithm and of a distance sample number.

4. The method as claimed in claim 1, **characterized in that** the pre-detections are stored in a memory whose addresses are defined by an index corresponding to an azimuth range and an index corresponding to a distance range.

5. The method as claimed in claim 1, **characterized in that** the reference azimuth is the 0° azimuth.
